# EUROPÄISCHE PATENTSCHRIFT

(11) **EP 0 330 144 B1**
(45) Veröffentlichungstag und Bekanntmachung des Hinweises auf die Patenterteilung: **03.07.1996**
(21) Anmeldenummer: 89102997.7
(22) Anmeldetag: 21.02.1989
(51) Int. Cl.: G01N 17/00, G01N 17/04

(54) **Verfahren zur direkten Bestimmung von komplexen korrosiven Umgebungsbedingungen**
Process for the direct determination of complex corrosive environmental conditions
Procédé de détermination directe de conditions ambiantes complexes et corrosives

(30) Priorität: 22.02.1988 DE 3805495
(43) Veröffentlichungstag der Anmeldung: 30.08.1989
(73) Patentinhaber: FRAUNHOFER-GESELLSCHAFT ZUR FÖRDERUNG DER ANGEWANDTEN FORSCHUNG E.V., D-80636 München (DE)
(72) Erfinder: Fuchs, Dieter, Dr., D-8707 Veitshöchheim (DE); Patzelt, Helmut, Dr., D-5418 Marienrachdorf (DE); Tünker, Gerhard, D-4100 Duisburg 14 (DE)

(56) Entgegenhaltungen:
- EP-A- 0 302 986
- DE-A- 2 502 239
- IBM TECHNICAL DISCLOSURE BULLETIN, Band 26, Nr. 3B, August 1983 K.H.KELLEHER et al. "Characterization of back- side roughess of silicon wafers by Mid-IR- Spectrometry"Seiten 1597-1599
- ENCYCLOPEDIA OF PHYSICAL SCIENCE AND TECHNOLOGY, VOLUME 6, ACADEMIC PRESS, 1987, P.264FF, KEYWORD "GLASS"
- D. Tregoat et al.: "Corrosion of HMFG by water vapor determination of EOH and diffusion profile" in Chemical abstracts, Vol.104, 1986, p.114575

## Beschreibung

In den letzten Jahren ist die Belastung der Luft durch Schadstoffe, z.B. Schwefeldioxid, Stickoxide, krebserzeugende organische Verbindungen etc. und die dadurch in zunehmendem Maße verursachten Schäden nicht nur in der Natur sondern auch an Gebäuden, Denkmälern und dergleichen immer mehr in das Bewußtsein der Bevölkerung gerückt. In dem Bemühen, Kunstwerke und andere Gegenstände von kulturellem bzw. kunsthistorischen Interesse trotz der widrigen Umweltbedingungen für die Nachwelt so gut wie möglich zu erhalten, werden Konservierungsmaßnahmen der verschiedensten Art ergriffen und selbstverständlich ist man insbesondere darum bemüht, wertvolle Gegenstände gegen korrodierende Umgebungsbedingungen abzuschirmen. So stellen z.B. externe Außenschutzverglasungen die heute übliche Methode zum Schutz historischer, korrosionsgefährdeter Glasmalereien, insbesondere bei mittelalterlichen Kirchenfenstern, dar.

Wie weit eine derartige Abschirmung tatsächlich die in sie gesetzten Erwartungen erfüllt, ist aber nicht ohne weiteres festzustellen. Die verlässlichste Methode wäre zweifellos eine direkte Untersuchung des zu schützenden Objekts auf Korrosionseffekte. Dies ist in den meisten Fällen aber nur schwierig oder aber überhaupt nicht durchführbar, da derartige Untersuchungen in der Regel nicht vor Ort sondern im Labor durchgeführt werden müssen, wodurch sich Transportprobleme ergeben und andererseits diese Untersuchungen meist nicht ohne Beschädigung des zu untersuchenden Gegenstandes möglich sind. Eine direkte Wertung der tatsächlich erreichten Schutzwirkung durch Analyse des Korrosionsfortschritts am zu schützenden Objekt selbst ist auch wegen der hierzu erforderlichen langen Beobachtungszeiten und aufgrund analytischer Probleme (nicht-reproduzierbare Oberflächenverhältnisse, submikroskopische Natur der primären Korrosionsvorgänge etc.) in der Regel nicht möglich. Aus diesem Grund wurden bisher zahlreiche Forschungsarbeiten zur indirekten Erfassung der korrosiven Verhältnisse anhand relevanten Klimadaten, z.B. Feuchte und Temperatur, durchgeführt. Allen diesen Untersuchungen ist jedoch gemeinsam, daß nur klimatische Randbedingungen bestimmt werden, wegen der komplexen und noch weitgehend ungeklärten Korrosionsmechanismen jedoch keine direkte Aussage zur korrosiven Situation auf der Oberfläche des interessierenden Gegenstandes möglich ist. Hinzu kommt, daß dafür ein sehr großer apparativer Aufwand betrieben werden muß, der für eine praktische Anwendung in der Regel zu kostspielig ist. So muß jeder Umweltfaktor, dessen Einfluß auf den Korrosionsvorgang zu berücksichtigen ist, einzeln bestimmt werden, was unter Berücksichtigung subklimatischer Unterschiede eine Vielzahl von Messungen und Meßsensoren erforderlich macht, selbst wenn nur ein einziger Gegenstand untersucht werden soll.

Der Artikel von C.J. Iliffe und R.G. Newton: "Using triangular diagrams to understand the behaviour of medieval glass", Verres Refract., 30 (1976), 30-34 offenbart, daß Proben historischer Gläser verschiedenen Umgebungen, wie z.B. Sägespänen, Schwefelsäure und feuchten Atmosphären mit und ohne SO₂ ausgesetzt und anschließend im Hinblick auf korrosive Veränderungen untersucht werden.

Der nachveröffentlichte Artikel von K.J.S. Gillies und A. Cox: "Decay of medieval stained glass at York, Canterbury and Carlisle", Glastech. Ber. 61 (1988), Nr.3 offenbart die Zusammensetzung einer Vielzahl von historischen Gläsern, wobei z.B. eine mit YM 13 S bezeichnete Probe die in Mol% angegebenen Zusammensetzung 1.6% Na₂O, 9.1% MgO, 0.9% Al₂O₃, 53.0% SiO₂, 2.9% P₂O₅, 14.2% K₂O und 17.2% CaO und eine mit YM 344 bezeichnete Probe die Zusammensetzung 1.3% Na₂O, 5.2% MgO, 0.7% Al₂O₃, 54.5% SiO₂, 1.7% P₂O₅, 7.4% K₂O und 27.6% CaO aufweist.

Es besteht somit ein Bedürfnis nach einem billigen, technisch wenig aufwendigen und zuverlässigen Verfahren zur direkten Bestimmung von komplexen korrosiven Umgebungsbedingungen. Aufgabe der vorliegenden Erfindung ist die Bereitstellung eines derartigen Verfahrens. Diese Aufgabe wird erfindungsgemäß gelöst durch ein Verfahren gemäß Anspruch 1.

Als auf Strahlung basierende Meßmthode kommen prinzipiell alle bekannten Verfahren in Frage, wie z.B. IR-, UV-, NMR-, PES-spektroskopische und (elektronen)mikroskopische Untersuchungen. Auch Meßverfahren unter Verwendung von Röntgenstrahlen und andere zur Charakterisierung von Oberflächen geeignete Methoden sind erfindungsgemäß einsetzbar. Unter dem Gesichtspunkt des geringen apparativen Aufwands und der leichten Auswertbarkeit der erhaltenen Ergebnisse werden IR-spektroskopische Verfahren bevorzugt.

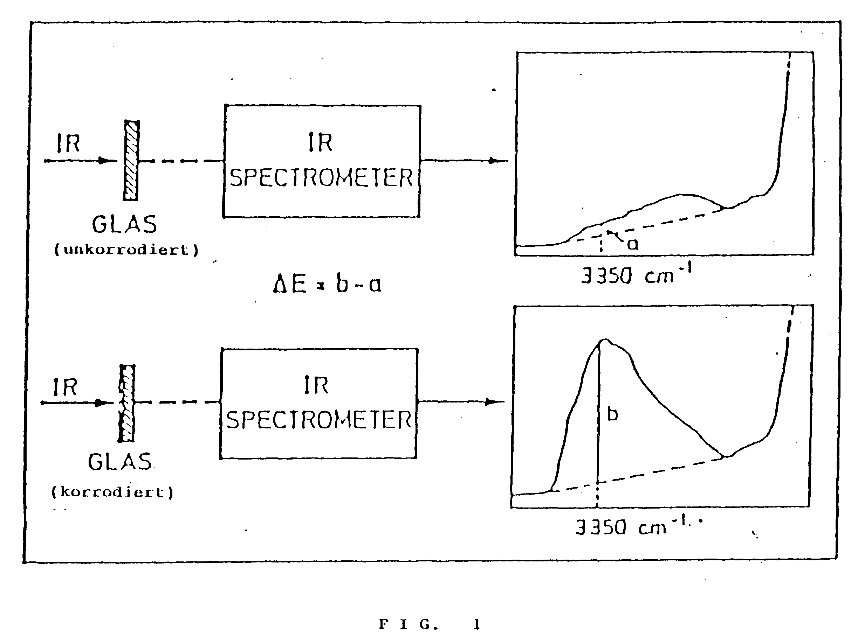

Gemäß einer besonders bevorzugten Ausführungsform der vorliegenden Erfindung wird die Glasoberfläche vor und nach dem Kontakt mit den korrodierenden Umgebungsbedingungen IR-spektroskopisch im Hinblick auf die Verstärkung der OH-Schwingungsbande untersucht. Dabei geht man zweckmäßigerweise am einfachsten so vor, daß man die Differenz ΔE der Extinktion vor und nach der Exponierung bei ca. 3350 cm⁻¹, dem Absorptionsmaximum der OH-Schwingung von Wasser mißt (siehe Fig. 1). Die Zunahme der Extinktion ist proportional zur Wasseraufnahme durch die Glasoberfläche und ist deshalb ein sehr verlässliches Maß für den Fortschritt des Korrosionsprozesses.

Es ist bekannt, daß das Glas in Abhängigkeit von seiner Zusammensetzung, insbesondere seinem Gehalt an SiO₂, K₂O und CaO, unterschiedlich auf korrodierende Umweltfaktoren reagiert. Um ein möglichst zuverlässiges Bild von den korrodierenden Umgebungsbedingungen zu erhalten wird es demnach erfindungsgemäß bevorzugt, parallel Untersuchungen an Glasoberflächen unterschiedlicher chemischer Zusammensetzung durchzuführen. Je nach Zusammensetzung des Glases kann man dadurch sowohl Informationen über die Zeitabhängigkeit der Korrosion als auch über die Höhe der Belastung durch die Korrosion verursachenden Faktoren erhalten.

Da es sich bei der umweltbedingten Korrosion um einen relativ langsamen Vorgang handelt, ist es zweckmäßig, die Glasoberfläche den korrosiven Umgebungsbedingungen für eine Zeitspanne auszusetzen, die ausreicht, um merkliche und spektroskopisch leicht nachweisbare Veränderungen auf der Glasoberfläche hervorzurufen. Obwohl diese Zeitspanne naturgemäß im wesentlichen davon abhängt, ob es sich um ein gegenüber korrosiven Bedingungen empfindliches oder weniger empfindliches Glas handelt und in welchem Maße korrosive Faktoren vorhanden sind, ist eine Zeitspanne von mindestens 3 Monaten empfehlenswert. Noch bevorzugter ist eine Zeitspanne von mindestens 6 Monaten. Um die jahreszeitlich bedingten Schwankungen in den korrosiven Umgebungsfaktoren berücksichtigen zu können, kann es sogar erforderlich sein, die Glasoberfläche 1 Jahr oder länger den korrosiven Bedingungen auszusetzen. Prinzipiell ist der Exponierungsdauer nach oben keine Grenze geseizt. Allerdings ist zu berücksichtigen, daß empfindliche Gläser schneller korrodieren und dadurch früher oder später die äußersten Schichten der Oberfläche abzublättern beginnen, wodurch die Meßergebnisse verfälscht werden.

Das erfindungsgemäße Verfahren liefert besonders aussagekräftige Ergebnisse, wenn es zur Untersuchung von Korrosionsvorgängen an Glasgegenständen, z.B. an historischen Glasfenstern, herangezogen wird, weil man dann als Glasoberfläche zusätzlich u.a. eine solche wählen kann, die in ihrer Zusammensetzung der Zusammensetzung des historischen Glases entspricht und dadurch unmittelbar Aussagen über Korrosionseffekte an der Oberfläche des interessierenden Gegenstandes möglich sind, ohne daß dieser selbst transportiert und untersucht werden müßte. Die Zusammensetzungen von historischen, insbesonders mittelalterlichen Gläsern können der Literatur entnommen werden, z.B. C.J. Iliffe und R.G. Newton, "Using triangular diagrams to understand the behaviour of medieval glass", Verres Refract., 30 (1976) 30 bis 34.

Zur Durchführung des erfindungsgemäßen Verfahrens wird ein Glassensor gemäß Anspruch 6 verwendet. Diese Sensoren sind insbesondere für IR-spektroskopische Untersuchungen geeignet. Die Abdeckung einer Oberfläche der Glasplättchen ist deshalb von Vorteil, weil dadurch nur eine Oberfläche den korrosiven Umgebungsbedingungen ausgesetzt wird. Wären beide Glasoberflächen frei zugänglich, würde bei der anschließenden IR-spektroskopischen Untersuchung die Summe der Wasseraufnahme auf Vorder- und Rückseite gemessen. Da die Umgebungsbedingungen in Abhängigkeit von der Art und Weise der Anbringung des Glassensors auf der Vorder- und Rückseite unterschiedlich sein können, würde man dadurch nur den Mittelwert dieser Umweltbedingungen bestimmen. Die Abdeckung der Rückseite kann z.B. durch Aufkleben einer Aluminium- oder Kunststoffolie erfolgen. Bei einer ganzflächigen Abdeckung der Rückseite muß diese vor der Einführung des Glasplättchens in das IR-Spektrometer in geeigneter Weise entfernt werden, wenn die Abdeckung für IR-Strahlung nicht durchlässig ist. Gegebenenfalls kann man auch eine kleine Öffnung in der Abdeckung (z.B. der Aluminiumfolie) vorsehen und auf diese Abdeckung dann in geeigneter Weise ein korrosionsbeständiges Glas so anbringen, daß die freie Oberfläche auf der Rückseite des Glassensors von den korrodierenden Umgebungsbedingungen abgeschirmt wird. In diesem Fall erübrigt sich eine Entfernung der Abdeckung vor der Messung.

Die Glasplättchen des erfindungsgemäßen Glassensors können z.B. hergestellt werden, indem man in an sich bekannter Weise die Glasbestandteile vorzugsweise zu Blockglas verschmilzt und diesen Block dann in Scheiben der gewünschten Dicke schneidet. Dabei muß man berücksichtigen, daß die Oberfläche dieser Scheiben in der Regel noch mechanisch poliert werden müssen, wodurch die Dicke der Scheiben bzw. Plättchen noch etwas verringert wird. Die Oberfläche der Plättchen sollte möglichst glatt sein, da bei einer rauhen Oberfläche unerwünschte Streueffekte auftreten. Auch sollte dafür Sorge getragen werden, daß die Zusammensetzung an der Oberfläche sehr homogen ist, da im erfindungsgemäßen Verfahren die Oberfläche zweimal untersucht wird (einmal vor und einmal nach dem Exponieren) und in der Regel die beiden Messungen nicht an exakt derselben Stelle der Oberfläche durchgeführt werden, so daß bei einer Inhomogenität der Oberfläche die Gefahr besteht, daß die Meßergebnisse dadurch verfälscht werden (wie bereits oben erläutert, ändert sich das Korrosionsverhalten auch mit der chemischen Zusammensetzung der Oberfläche).

Statt durch mechanisches Polieren kann die Oberfläche auch auf viele andere für diesen Zweck geeignete Methoden, z.B. durch Feuerschmelzung, glatt und homogen gemacht werden.

Selbstverständlich kann die zu untersuchende Glasoberfläche auch auf einen (vorzugsweise transparenten) Träger aufgebracht werden, z.B. durch Aufschmelzen, Aufdampfen, das Sol-Gel-Verfahren und andere für diesen Zweck geeignete, bekannte Verfahren. Die Dicke der Oberflächenschicht sollte sich dabei vorzugsweise in dem für Glasplättchen einheitlicher Zusammensetzung angegebenen Rahmen halten. Als Trägermaterial eignet sich in diesem Fall besonders ein widerstandsfähiges Glas.

Erfindungsgemäß weisen die Glassensoren Glasplättchen einer Dicke von 0,1 bis 10 mm auf. Diese Grenzwerte für die Abmessungen sind ausschließlich durch praktische Gesichtspunkte festgelegt. Bei einer geringeren Dicke als 0,1 mm ist die Handhabbarkeit der Glasplättchen bereits so stark beschränkt, daß sie nur noch unter großen Vorsichtsmaßnahmen transportiert werden können. Eine Dicke über 10 mm ist unökonomisch und erschwert die durchzuführenden Messungen. Besonders bevorzugt ist eine Dicke der Glasplättchen im Bereich von 0,25 bis 1 mm, insbesondere 0,4 bis 0,6 mm. Die exponierte Glasfläche kann können prinzipiell jede beliebige Größe aufweisen. Die exponierbare Glasoberfläche sollte aber in der Regel nicht kleiner als 0,25 cm², vorzugsweise nicht kleiner als 0,5 cm² sein. Nach oben ist die Größe der Glasoberfläche prinzipiell nicht beschränkt. Nicht zuletzt aus wirtschaftlichen Überlegungen wird man jedoch diese Fläche in der Regel möglichst klein wählen, wobei auch zu berücksichtigen ist, daß ein Glassensor um so unauffälliger angebracht werden kann, je kleiner seine Abmessungen sind.

Wie bereits oben erwähnt, ist es meistens vorteilhaft, Paralleluntersuchungen an Gläsern unterschiedlicher Zusammensetzung durchzuführen. Zu diesem Zweck können mehrere getrennte Glassensoren verwendet werden oder der Glassensor umfaßt als solcher bereits Glasplättchen mit unterschiedlicher Zusammensetzung. Dies ist von Vorteil, da damit gewährleistet ist, daß alle untersuchten Gläser exakt derselben Umgebung ausgesetzt waren.

Es ist bekannt, daß Gläser um so korrosionsstabiler werden, je höher ihr Gehalt an SiO₂ ist. Umgekehrt sind Gläser mit einem hohen Kalium- und Calciumgehalt besonders anfällig für korrodierende Umgebungsbedingungen. Demzufolge hat eine Variation der Mengen der soeben genannten Bestandteile einen großen Einfluß auf die Eigenschaften und das Korrosionsverhalten des jeweiligen Glases. So wurde nun gefunden, daß ein bestimmter Glastyp sehr rasch auf saure Schadgase reagiert und eine zu √t proportionale ΔE-Entwicklung (bei 3350 cm⁻¹) im IR-Spektrum aufweist (die Korrosion schreitet mit der Zeit rasch fort). Dieser erfindungsgemäße Glastyp weist die folgende Zusammensetzung auf:
43 bis 52 Gewichtsprozent SiO₂
20 bis 30 Gewichtsprozent K₂O
12 bis 18 Gewichtsprozent CaO
und mindestens eines der Oxide Na₂O, MgO, Al₂O₃ und P₂O₅ in einer Gesamtmenge von 9 bis 15 Gewichtsprozent.

Repräsentativ für einen derartigen Glastyp ist das Glas A mit der folgenden Zusammensetzung: 48,0 Gewichtsprozent SiO₂, 25,5 Gewichtsprozent K₂O, 15,0 Gewichtsprozent CaO, 3,0 Gewichtsprozent Na₂O, 3,0 Gewichtsprozent MgO, 1,5 Gewichtsprozent Al₂O₃ und 4,0 Gewichtsprozent P₂O₅.

Der zweite erfindungsgemäße Glastyp zeigt bei hoher Belastung nur einen langsamen Korrosionsfortschritt bis zu einem gewissen Korrosionsniveau, auf dem die Verwitterung dann stagniert. Die "Höhe" dieses Niveaus, das durch die IR-Methode sehr genau bestimmbar ist, variiert mit der Höhe der korrosiven Belastungsparameter und kann daher als Indikator bei stark korrosiven Bedingungen verwendet werden. Dieser Glastyp weist die folgende Zusammensetzung auf:
50 bis 70 Gewichtsprozent SiO₂
10 bis 20 Gewichtsprozent K₂O
20 bis 30 Gewichtsprozent CaO
und gegebenenfalls mindestens eines der Oxide Na₂O, MgO, Al₂O₃ und P₂O₅ in einer Gesamtmenge bis zu 10 Gewichtsprozent.

Ein konkretes Beispiel für diesen Glastyp ist das Glas B mit der folgenden Zusammensetzung: 60,0 Gewichtsprozent SiO₂, 15,0 Gewichtsprozent K₂O und 25,0 Gewichtsprozent CaO.

Somit lassen sich durch Einsatz unterschiedlicher Glastypen an demselben Ort unterschiedliche und einander ergänzende Informationen über die dort herrschenden korrodierenden Umgebungsbedingungen erhalten.

Der Einsatz verschiedener Gläser unterschiedlicher Empfindlichkeit empfiehlt sich auch deshalb, weil dadurch gewährleistet ist, daß immer auswertbare Gläser vorhanden sind, selbst wenn einzelne der Gläser infolge ihrer Empfindlichkeit bereits unbrauchbar geworden sind (z.B. durch Aufreißen und Abblättern der Oberfläche).

Die Anbringung der erfindungsgemäßen Glassensoren kann auf beliebige Art und Weise erfolgen, z.B. durch Anheften, Ankleben, Anhängen, Anbinden usw. Selbstverständlich können anstatt oder zusätzlich zur IR-Untersuchung der Glassensoren auch andere Bestimmungen die ebenfalls auf Strahlung basieren, durchgeführt werden. So kann z.B. die Photoelektronenspektroskopie wichtige Informationen über das Auslaugen der (Alkali- und Erdalkali-)Metallionen an der Oberfläche (Tiefe der Auslaugung) liefern. Auch Untersuchungen mit dem Rasterelektronenmikroskop und röntgenographische Untersuchungen der Oberfläche können wichtige (zusätzliche) Informationen über die Korrosionsvorgänge liefern. Auch die Messung des Transparenzverlustes der Glasplättchen nach der Exponierung ist ein einfaches und aufschlußreiches Untersuchungsverfahren.

Ein wesentlicher Vorteil des erfindungsgemäßen Verfahrens ist es, daß auch korrosive Faktoren berücksichtigt werden, die anderweitig nur schwer erfaßbar sind, z.B. die Förderung der Korrosionsvorgänge durch Mikroorganismen, die sich auf der Oberfläche des interessierenden Gegenstandes befinden.

Ein wichtiges Anwendungsgebiet des erfindungsgemäßen Verfahrens ist die Untersuchung der Wirksamkeit von Schutzmaßnahmen, insbesondere der Außenschutzverglasung bei historischen Fenstern, z.B. Kirchenfenstern. Die Einbringung der erfindungsgemäßen Glassensoren in den Zwischenraum von Original- und Außenschutzverglasungen, die meistens ohne weiteres von der Innenseite der Originalverglasung aus möglich ist, und die Untersuchung dieser Glassensoren vor und nach der Einbringung erlaubt es, zuverlässige Informationen über die korrosiven Bedingungen in diesem Zwischenraum zu erhalten, und bei zusätzlicher Verwendung eines Glasplättchens, dessen Zusammensetzung der Zusammensetzung der Originalverglasung entspricht, sind direkte Aussagen über die Wirksamkeit der Schutzmaßnahmen in bezug auf die Originalverglasung möglich. Erfindungsgemäß ist es auch möglich, durch Vergleich der Ergebnisse, die mit Glassensoren erhalten wurden, die zum einen vor und zum anderen hinter den konstruktiven Korrosionsschutzmaßnahmen (z.B. einer Außenschutzverglasung) angebracht waren, die tatsächlich erreichte Schutz- (Abschirmungs-)wirkung im konkreten Fall abzuschätzen (siehe Beispiel).

Auch die leichte Anbringbarkeit der erfindungsgemäßen Sensoren ist von Vorteil, da dadurch eine Bestimmung an unterschiedlichen Stellen der Schutzkonstruktion und des Bauwerks durchgeführt werden kann. Damit sind zusätzliche objektspezifische Detailinformationen erhältlich.

Zusammenfassend verfügt das erfindungsgemäße Verfahren über viele Vorteile, und ermöglicht insbesondere eine einfache und gleichzeitig sehr zuverlässige Bestimmung von komplexen korrosiven Umgebungsbedingungen und deren Auswirkungen auf ein konkretes, korrosionsgefährdetes Objekt.

Das folgende Beispiel veranschaulicht die vorliegende Erfindung.

Mit Hilfe von Glassensoren, die 2 Glasplättchen unterschiedlicher chemischer Zusammensetzungen (A und B, siehe oben) umfaßten, wurden an 3 Kirchen (St. Lorenz/Nürnberg, St. Jans/Gouda und Minster/York) Untersuchungen an den jeweiligen Kirchenfenstern durchgeführt. Zu diesem Zweck wurden Sensoren sowohl an der Außenseite der Schutzverglasung als auch im Zwischenraum von Schutz- und Originalverglasung angebracht. Nach einem Jahr wurden die ΔE-Werte bei 3350 cm⁻¹ im IR-Spektrum bestimmt. Die Ergebnisse sind in der folgenden Tabelle aufgeführt. Diese Ergebnisse verdeutlichen nicht nur das unterschiedliche Ansprechen der beiden Modellgläser auf die jeweiligen Umgebungsbedingungen, sondern zeigen auch, daß die Schutzverglasung zu einer erheblichen Verminderung der Korrosionsfaktoren führt. Dennoch wird deutlich, daß die Korrosion auch auf der (angeblich sicher geschützten) Außenseite der Originalverglasung in einem nicht zu vernachlässigenden Maße weiter fortschreitet, so daß weitere Schutzmaßnahmen erforderlich sind.

**TABELLE**

| **ΔE-Werte für Glas A(B)** | | |
|---|---|---|
| | Auβenseite der Schutzverglasung | Zwischenraum von Schutz- und Originalglas |
| St. Lorenz Nürnberg | 0,72 (0,07) | 0,07 (0,03) |
| St. Jans Gouda | 0,70 (0,07) | 0,04 (0,01) |
| Minster York | 0,40 (0,11) | 0,07 (0,02) |

## Patentansprüche

1. Verfahren zur direkten Bestimmung von komplexen korrosiven Umweltbedingungen, bei dem man eine oder mehrere Glasoberflächen der zu untersuchenden Umgebung aussetzt und diese Glasoberflächen vor und nach der Exposition mit einer auf Strahlung basierenden Meßmethode untersucht, um Korrosionseffekte, insbesondere Wasseraufnahme und Ionenaustausch, zu bestimmen, wobei mindestens eine der Glasoberflächen eine der folgenden Zusammensetzungen aufweist:
(a) 43 bis 52 Gew.-% SiO₂
20 bis 30 Gew.-% K₂O
12 bis 18 gew.-% CaO
und mindestens eines der Oxide Na₂O, MgO, Al₂O₃ und P₂O₅ in einer Gesamtmenge von 9 bis 15 Gew.-%;
(b) 50 bis 70 Gew.-% SiO₂
10 bis 20 Gew.-% K₂O
20 bis 30 Gew.-% CaO
und gegebenenfalls mindestens eines der Oxide Na₂O, MgO, Al₂O₃ und P₂O₅ in einer Gesamtmenge bis zu 10 Gew.-%.

2. Verfahren nach Anspruch 1, dadurch gekennzeichnet, daß die auf Strahlung basierende Meßmethode ein IR-spektroskopisches Verfahren ist.

3. Verfahren nach Anspruch 2, dadurch gekennzeichnet, daß man die Verstärkung der OH-Schwingungsbande im IR-Spektrum, vorzugsweise durch Bestimmung der Extinktion bei ca. 3350 cm⁻¹, mißt.

4. Verfahren nach einem der Ansprüche 1 bis 3, dadurch gekennzeichnet, daß man die Korrosionseffekte durch parallele Untersuchungen an Glasoberflächen unterschiedlicher chemischer Zusammensetzung bestimmt.

5. Verfahren nach einem der Ansprüche 1 bis 4, dadurch gekennzeichnet, daß man die Glasoberfläche mindestens 3, vorzugsweise mindestens 6, Monate lang der Umgebung aussetzt.

6. Glassensor zur Verwendung in einem Verfahren nach einem der Ansprüche 1 bis 5, dadurch gekennzeichnet, daß er ein oder mehrere Glasplättchen einer Dicke von 0,1 bis 10 mm, vorzugsweise 0,25 bis 1 mm, umfaßt, deren Rückseite gasdicht mit Metall, Kunststoff und/oder Glas abgedeckt ist, wobei mindestens eines der Glasplättchen eine der folgenden Zusammensetzungen aufweist:
(a) 43 bis 52 Gew.-% SiO₂
20 bis 30 Gew.-% K₂O
12 bis 18 Gew.-% CaO
und mindestens eines der Oxide Na₂O, MgO, Al₂O₃ und P₂O₅ in einer Gesamtmenge von 9 bis 15 Gew.-%.;
(b) 50 bis 70 Gew.-% SiO₂
10 bis 20 Gew.-% K₂O
20 bis 30 Gew.-% CaO
und gegebenenfalls mindestens eines der Oxide Na₂O, MgO, Al₂O₃ und P₂O₅ in einer Gesamtmenge bis zu 10 Gew.-%.

7. Glassensor nach Anspruch 6, dadurch gekennzeichnet, daß er aus mehreren Glasplättchen unterschiedlicher chemischer Zusammensetzung besteht.

8. Glassensor nach einem der Ansprüche 6 und 7, dadurch gekennzeichnet, daß die exponierbare Oberfläche des oder der Glasplättchen jeweils mindestens 0,25 cm², vorzugsweise mindestens 0,5 cm² beträgt.

## Claims

1. Method for the direct determination of complex, corrosive environmental conditions, in which one or *several* glass surfaces are exposed to the environment to be investigated, and these glass surfaces are investigated by a measurement method based on radiation before and after exposure in order to determine corrosion effects, especially absorption of water and ion exchange, wherein at least one of the glass surfaces exhibits one of the following compositions:
(a) 43 to 52 wt % of SiO₂
20 to 30 wt % of K₂O
12 to 18 wt % of CaO
and at least one of the oxides Na₂O, MgO, Al₂O₃ and P₂O₅ to a total quantity of 9 to 15 wt %;
(b) 50 to 70 wt % of SiO₂
10 to 20 wt % of K₂O
20 to 30 wt % of CaO
and, if need be, at least one of the oxides Na₂O, MgO, Al₂O₃ and P₂O₅ to a total quantity of up to 10 wt %.

2. Method according to claim 1, characterised in that the measurement method based on radiation is an IR spectroscopic method.

3. Method according to claim 2, characterised in that the intensification of the OH vibrations bands in the IR spectrum is measured, preferably by determination of the absorbance at about 3350 cm⁻¹.

4. Method according to one of the claims 1 to 3, characterised in that the corrosion effects are determined by parallel investigations on glass surfaces of different chemical composition.

5. Method according to one of the claims 1 to 4, characterised in that the glass surface is exposed to the surroundings for at least 3, preferably at least 6, months.

6. Glass sensor for use in a method according to one of the claims 1 to 5, characterised in that it comprises one or several small glass plates of thickness 0.1 to 10 mm, preferably 0.25 to 1 mm, the rearward side of which is covered in gas-tight manner with metal, plastic and/or glass, wherein at least one of the small glass plates exhibits one of the following compositions:
(a) 43 to 52 wt % of SiO₂
20 to 30 wt % of K₂O
12 to 18 wt % of CaO
and at least one of the oxides Na₂O, MgO, Al₂O₃ and P₂O₅ to a total quantity of 9 to 15 wt %;
(b) 50 to 70 wt % of SiO₂
10 to 20 wt % of K₂O
20 to 30 wt % of CaO
and, if need be, at least one of the oxides Na₂O, MgO, Al₂O₃ and P₂O₅ to a total quantity of up to 10 wt %.

7. , Glass sensor according to claim 6, characterised in that it is composed of several small glass plates of different chemical composition.

8. Glass sensor according to one of the claims 6 and 7, characterised in that each surface of the small glass plate or plates capable of exposure amounts at least to 0.25 cm², preferably to at least 0.5 cm².

## Revendications

1. Procédé pour la determination directe de conditions environnantes complexes corrosives, dans lequel on expose une ou plusieurs surfaces en verre à l'environnement à analyser et on analyse ces surfaces en verre avant et après l'exposition au moyen d'un procédé de mesure fondé sur un rayonnement, pour determiner les effets de la corrosion, en particulier l'absorption d'eau et l'échange d'ions, au moins une des surfaces en verre ayant une des compositions suivantes :
(a) 43 à 52 % en poids de SiO₂,
20 à 30 % en poids de K₂O,
12 à 18 % en poids de CaO,
et au moins un des oxydes Na₂O, MgO, Al₂O₃ et P₂O₅ en une quantité totale de 9 à 15 % en poids ;
(b) 50 à 70 % en poids de SiO₂,
10 à 20 % en poids de K₂O,
20 à 30 % en poids de CaO,
et éventuellement au moins un des oxydes Na₂O, MgO, Al₂O₃ et P₂O₅ en une quantité totale allant jusqu'à 10 % en poids.

2. Procédé selon la revendication 1, caractérisé en ce que le procédé de mesure fondé sur le rayonnement est un procédé de spectroscopie IR.

3. Procédé selon la revendication 2, caractérisé en ce qu'on mesure l'amplification des bandes d'oscillation OH dans le spectre IR, de préférence par détermination de l'extinction à environ 3 350 cm⁻¹.

4. Procédé selon l'une des revendications 1 à 3, caractérisé en ce qu'on détermine les effets de la corrosion grâce à des analyses parallèles sur des surfaces en verre ayant des compositions chimiques différentes.

5. Procédé selon l'une des revendications 1 à 4, caractérisé en ce qu'on expose la surface en verre au milieu ambiant pendant au moins 3 mois, de preference au moins 6 mois.

6. Détecteur en verre destiné à être utilisé dans un procédé selon l'une des revendications 1 à 5, caractérisé en ce qu'il comprend une ou plusieurs lamelles de verre ayant une épaisseur de 0,1 à 10 mm, de préférence de 0,25 à 1 mm, dont la face arrière est recouverte de métal, de matière plastique et/ou de verre, d'une manière étanche aux gaz, au moins une des lamelles de verre ayant une des compositions suivantes :
(a) 43 à 52 % en poids de SiO₂,
20 à 30 % en poids de K₂O,
12 à 18 % en poids de CaO,
et au moins un des oxydes Na₂O, MgO, Al₂O₃ et P₂O₅ en une quantité totale de 9 à 15 % en poids ;
(b) 50 à 70 % en poids de SiO₂,
10 à 20 % en poids de K₂O,
20 à 30 % en poids de CaO,
et éventuellement au moins un des oxydes Na₂O, MgO, Al₂O₃ et P₂O₅ en une quantité totale allant jusqu'à 10 % en poids.

7. Détecteur en verre selon la revendication 6, caractérisé en ce qu'il est formé de plusieurs lamelles de verre ayant des compositions chimiques différentes.

8. Détecteur en verre selon l'une des revendications 6 et 7, caractérisé en ce que la surface exposable de la lamelle de verre ou des lamelles de verre vaut à chaque fois au moins 0,25 cm², de préférence au moins 0,5 cm².
